(19) Europäisches Patentamt

European Patent Office

Office européen des brevets

(11) Veröffentlichungsnummer: **0 406 607 A1**

## (12) EUROPÄISCHE PATENTANMELDUNG

(21) Anmeldenummer: 90111408.2

(22) Anmeldetag: 16.06.90

(51) Int. Cl.5: **A01K 7/06**, F16K 21/04

(30) Priorität: 29.06.89 DE 3921372

(43) Veröffentlichungstag der Anmeldung:
**09.01.91 Patentblatt 91/02**

(84) Benannte Vertragsstaaten:
**AT BE DE DK FR GB IT NL**

(71) Anmelder: **ARATOWERK WALTER VON TASCHITZKI GmbH & CO. KG KG**
**Alte Forststrasse 55**
**D-5000 Köln-Rath (Heumar)(DE)**

(72) Erfinder: **von Taschitzki, Rainer**
**Alte Forststrasse 55**
**D-5000 Köln-Rath (Heumar)(DE)**

(74) Vertreter: **Schönwald, Karl, Dr. et al**
**Patentanwälte von Kreisler, Selting, Werner**
**Deichmannhaus am Hauptbahnhhof**
**D-5000 Köln 1(DE)**

(54) **Zapfentränker für Tiere.**

(57) Der Zapfentränker für Tiere, besitzt eine Vorrichtung zum Anschluß an eine Wasserleitung, wobei ein aus dem Gehäuse herausragendes und aus der Gehäuseachse kippbares hohles Mundstück vorhanden ist. Dabei sind der Mundstückkopf und der Stößelfuß an innen sich gegenüberstehenden Teilen je mit einem zu diesen Teilen radial überstehenden Scheibenteil von gleichem bzw. nahezu gleichem Durchmesser versehen. Durch Kippen des Mundstückes wird der Weg der Ausschwenkung des Mundstückkopfes auf den Scheibenteil des Stößelfußes zur Betätigung des Ventilstößels übertragen. Zwischen einem Rand (16a) des Stößelfußes (14) und dem Mundstückkopf (7) ist ein Ringsegment (21) angeordnet, das sich gegen einen ortsfesten Teil des Zapfentränkers abstützt.

FIG.1

EP 0 406 607 A1

## ZAPFENTRÄNKER FÜR TIERE

Die Erfindung bezieht sich auf einen Zapfentränker für Tiere, insbesondere Schweine, mit einer Vorrichtung zum Anschluß an eine Wasserleitung u.dgl., der ein vom Tier zu betätigendes, aus einem Gehäuse herausragendes und aus der Gehäuseachse kippbares hohles Mundstück aufweist, in welches das von einem Ventil freigegebene Wasser hineingeleitet wird und das mit seinem hinteren Ende mit einem axial verschiebbaren und unter Federdruck stehenden Ventilstößel zur Regelung der Wasser zufuhr zusammenwirkt. Der Kopf des Mundstücks und der Stößelfuß sind an innen sich gegenüberstehenden Teilen je mit einer zu diesen Teilen radial überstehenden Scheibe von gleichem bzw. nahezu gleichem Durchmesser versehen. Durch Kippen des Mundstücks wird der Weg der Ausschwenkung des Mundstückkopfes auf die Scheibe des Stößelfusses zur Betätigung des Ventilstößels übertragen.

Ein solcher Zapfentränker ist durch die DE-PS 26 32 734 bekannt.

Zur Begrenzung der Kippbewegung des Mundstücks ist für das Wasserspenden in einer von der Lotrechten abweichenden Stellung in einer vorbestimmten Richtung bei dem genannten Patent eine lose Kugel zwischen den sich gegenüberstehenden Scheiben des Mundstückkopfes und des Ventilstößelfußes angeordnet. Dabei wird die Auslenkung des als Kraftarm des Hebelsystems wirkenden Mundstückes in den größtmöglichen Weg der als Lastarm wirkenden Stößelscheibe übersetzt. Schon eine geringe Auslenkung des Mundstückes ergibt einen zum Öffnen des Ventils ausreichenden Stößelhub, so daß auch sehr kleine Ferkel mit verhältnismäßig geringer Kraftanstrengung den Wasserfluß auslösen können. Es soll die freie Kugel allein durch ihre Schwerkraft immer die richtige Position einnehmen. Es hat sich in der Praxis gezeigt, daß dies nicht immer der Fall ist. Die Kugel läßt auch eine axiale Bewegung des Mundstückes zu, was unerwünscht ist, jedoch infolge einer Manipulation durch das Tier erreicht wird. Dadurch ergibt sich ein Unsicherheitsfaktor. Es wird an Wasser mehr verschwendet als zum Trinken benötigt wird. Außerdem ist bei dem bekannten Zapfentränker eine sehr genaue Einstellung der Teile erforderlich.

Aufgabe der Erfindung ist es, den Zapfentränker der anfangs genannten Art hinsichtlich der Kippbewegung des Mundstückes für das Wasserspenden noch sicherer und zuverlässiger zu gestalten. Die Erfindung zeichnet sich hierzu dadurch aus, daß bei dem Zapfentränker der vorstehend beschriebenen Art zwischen einem Rand des Stößelfußes und dem Mundstückkopf ein ruhendes Segment angeordnet ist, das sich gegen einen ortsfesten Teil des Gehäuses abstützt.

Durch das ortsfeste Anschlagsegment für den Mundstückkopf kann dieser nur in einer vorbestimmten Stellung betätigt werden. Es kann eindeutig festgelegt werden, in welche Richtung der Mundstückkopf bewegt werden muß, um ein Spenden von Wasser zu erhalten. Eine axiale Verstellung des Mundstückkopfes kann von vornherein verhindert werden. Zweckmäßig erfolgt die Anordnung und Einstellung des Segmentes in der Weise, daß der Mundstückkopf nur nach unten kippbar ist, also nur von oben nach unten geschwenkt werden kann, um das Spenden von Wasser zum Tränken zu erreichen. Bei Betätigung des Mundstückkopfes von unten nach oben erfolgt keine Freigabe von Wasser. Das Tier wird an das Einhalten einer vorbestimmten Bewegung des Mundstückkopfes gewöhnt, so daß erreicht wird, daß das Wasser nur zum Trinken und nicht als Duschbad gespendet wird. Darüber hinaus ist der Erfindungsgegenstand einfach im Aufbau und zuverlässig und sicher in der Wirkung.

Gemäß einem weiteren Merkmal der Erfindung ist das Segment vorteilhaft ein Ringsegment, das in einer Aussparung des Randes des Stößelfußes liegt. Hierbei soll das Segment auf der Stirnfläche des Anschlußnippels aufsitzen. Ferner ist es zweckmäßig, daß das Segment die freie Stirnfläche des Stößelfußes überragt. Damit wird eine Achsbewegung des Mundstückes von vornherein begrenzt bzw. unmöglich gemacht.

Statt eines selbständigen Segmentes kann dieses auch Teil des Anschlußnippels sein.

Die Erfindung wird anhand eines in der Zeichnung dargestellten Ausführungsbeispieles nachstehend erläutert.

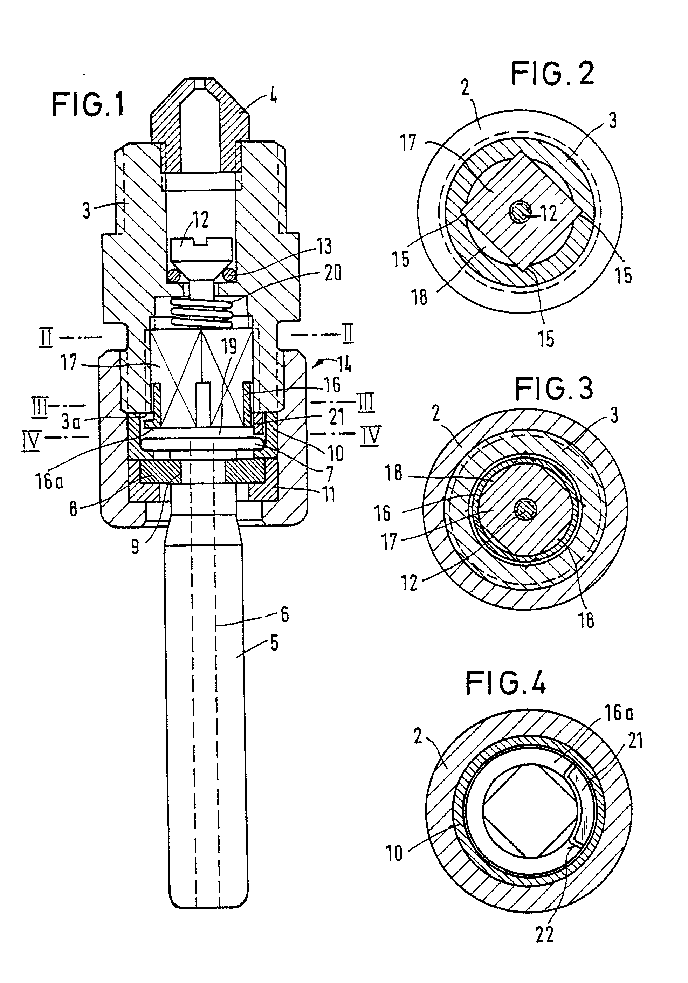

Figur 1 zeigt die Erfindung in einem Ausführungsbeispiel des Zapfentränkers im Längsschnitt und im Schema,

Figur 2 stellt einen Querschnitt nach der Linie II-II der Figur 1 dar,

Figur 3 ist ein Querschnitt nach der Linie III-III der Figur 1,

Figur 4 veranschaulicht einen Querschnitt nach der Linie IV-IV der Figur 1.

Der Zapfentränker 1 weist ein Gehäuse 2 und einen in diesen einschraubbaren Anschlußnippel 3 mit vorgesetzter Düse 4 auf, wobei der Anschlußnippel in ein Innengewinde einer Muffe einer Wasserleitung od.dgl. eingeschraubt werden kann. In dem Gehäuse 2 ist ein aus diesem herausragendes Mundstück 5 mit einer Innenbohrung 6 gelagert. Der Kopf des Mundstückes 5 ist als Scheibe 7 ausgebildet. Die Halterung des Mundstückes 5 erfolgt durch eine Ringdichtung 8, die in einer Einschnürung 9 des Mundstückes 5 eingreift. Die Scheibe 7 liegt auf einem Innenflansch eines Führungsringes 10, und die Ringdichtung 8 wird von dem Innenflansch eines Gegenringes 11 abgestützt.

In dem Anschlußnippel 3 ist ein Stößelkopf 12 axial verschiebbar gelagert. Die Sitzfläche für den Stößelkopf 12 wird zweckmäßig durch einen O-Ring 13 gebildet. Man kann auch jeden anderen geeigneten Ventilsitz vorsehen. Der Stößelkopf 12 ist in einem Stößelfuß 14 eingeschraubt, der zweckmäßig zweiteilig ausgebildet ist. Er besteht aus einem Mehrkantstück 17, dessen dem Mundstück zugekehrte Seite einen Rand 16a einer Hülse 16 aufweist, so daß sich zwischen den Flächen des Mehrkants 17 und der Wandung der Hülse 16 mehrere Segmentschlitze 18 bilden, die der Wasserführung dienen, indem das Wasser bei geöffnetem Ventil durch die Segmentschlitze 18 in den Hohlraum 19 und weiter in die Bohrung 6 des Mundstückes 5 strömen kann. Solange keine auslenkende Kraft über das Mundstück 5 auf den Stößelfuß 14 einwirkt, schließt die Feder 20, welche sich gegen den Anschlußnippel 3 abstützt und auf den Stößelfuß 14 einwirkt, das Ventil, indem durch die Federkraft die Dichtfläche des Stößelkopfes 12 gegen den O-Ring 13 gezogen wird.

Durch Ablenken des Mundstückes 5 aus der Mittelachse durch das zu tränkende Tier, wobei die Halterung mittels der Ringdichtung 8 als Gelenkpunkt dient, nimmt die Scheibe 7 des Mundstückes 5 eine schräge Lage ein, und sie stößt gegen den Rand 16a der Hülse 16, wodurch der aus Stößelfuß 14 und Stößelkopf 12 bestehende Ventilstößel in Achsrichtung verschoben wird. Der an dem Sitz 13 abgesperrte Wasserzufluß wird je nach der Kippbewegung des Mundstückes 5 mehr oder weniger freigegeben, solange das Mundstück ausgeschwenkt gehalten wird. Nach Freigabe des Mundstückes 5 durch das Tier stellt sich das Mundstück selbsttätig in die neutrale Mittelstellung ein, wodurch der Stößelkopf durch die Feder 20 zum Absperren des Wasserzuflusses auf den Sitz 13 gezogen wird. Der Zwischenraum 19 zwischen der Scheibe 7 und dem Rand 16a kann durch das Verstellen des Stößelkopfes 12 eingestellt werden. Da die beiden Teile 7, 16a nahezu denselben Durchmesser haben, ist eine empfindliche Öffnungssteuerung ermöglicht. Die beiden Teile 7 und 16a sind in dem gemeinsamen Führungsring 10 gelagert, wobei die Ringdichtung 8 zwischen den Innenflanschen des Führungsringes 10 und des Gegenringes 11 eingespannt gehalten wird. Die axiale Verspannung der Ringe 10 und 11 ergibt sich durch das Einschrauben des Anschlußnippels 3.

Damit das Mundstück nur in eine vorher genau definierten Richtung gekippt werden kann, ist in dem Zwischenraum 19 zwischen den Teilen 7 und 16a ein Segment 21 angeordnet, das sich gegen einen ortsfesten Teil des Tränkers, vorzugsweise des Anschlußnippels 3 abstützt. Das Segment 21 erhält zweckmäßig die Gestalt eines Ringteils und befindet sich in einer Aussparung 22 des Randes 16a der Hülse 16. Hierbei wird die Anordnung so getroffen, daß das Segment 21 auf der Stirnfläche 3a des Anschlußnippels 3 aufsitzt. Dadurch kann sich das Ringsegment 21 in Achsrichtung nicht verschieben und begrenzt auch eine Bewegung des Mundstückes 5 in Achsrichtung. Das Segment 21 ist weiterhin vorteilhaft in einer Höhe vorgesehen, mit der das Ringsegment 21 die freie Stirnfläche des Stößelfußes 16,17 überragt.

Das Ringsegment 21 kann ein loses eingebautes Teil sein. Es wird gehalten in der Aussparung 22 des Randes 16a der Hülse 16 in Umfangsrichtung und in Achsrichtung einerseits durch den Anschlußnippel 3 und andererseits den Mundstückkopf 7. Es ist aber auch möglich, daß das Segment 21 mit dem Anschlußnippel 3 fest verbunden wird, oder daß das Segment einen Teil des Anschlußnippels bildet.

## Ansprüche

1. Zapfentränker für Tiere, insbesondere Schweine, mit einer Vorrichtung zum Anschluß an eine Wasserleitung u.dgl., der ein vom Tier zu betätigendes, aus einem Gehäuse herausragendes und aus der Gehäuseachse kippbares hohles Mundstück aufweist, in welches das von einem Ventil freigegebene Wasser hineingeleitet wird und das mit seinem hinteren Ende mit einem axial verschiebbaren und unter Federdruck stehenden Ventilstößel zur Beeinflussung der Wasserzufuhr zusammenwirkt, wobei der Mundstückkopf und der Stößelfuß an innen sich gegenüberstehenden Teilen je mit einer zu diesen Teilen radial überstehenden Scheibe von gleichem bzw. nahezu gleichem Durchmesser versehen sind und wobei durch Kippen des Mundstücks der Weg der Ausschwenkung des Mundstückkopfes auf den Rand des Stößelfußes zur Betätigung des Ventilstößels übertragen wird, dadurch gekennzeichnet, daß zwischen einem Rand (16a) des Stößelfußes (14) und dem Mundstückkopf (7) ein ruhendes Segment (21) angeordnet ist, das sich gegen einen ortsfesten Teil des Zapfentränkers abstützt.

2. Zapfentränker nach Anspruch 1, dadurch gekennzeichnet, daß das Segment (21) ein Ringsegment ist, das in einer Aussparung (22) des Randes (16a) des Stößelfußes (14) liegt.

3. Zapfentränker nach Anspruch 1 oder 2, dadurch gekennzeichnet, daß das Segment (21) auf der Stirnfläche (3a) des Anschlußnippels (3) aufsitzt.

4. Zapfentränker nach einem der Ansprüche 1 bis 3, dadurch gekennzeichnet, daß das Segment (21) die freie Stirnfläche des Stößelfußes (16,17) überragt.

5. Zapfentränker nach einem der Ansprüche 1 bis 4, dadurch gekennzeichnet, daß das Segment (21) mit dem Anschlußnippel (3) fest verbunden ist.

6. Zapfentränker nach einem der Ansprüche 1 bis 5, dadurch gekennzeichnet, daß das Segment (21) einen Teil des Anschlußnippels (3) bildet.

FIG.1

FIG. 2

FIG.3

FIG.4

Europäisches
Patentamt

Nummer der Anmeldung

EUROPÄISCHER
RECHERCHENBERICHT

EP 90 11 1408

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 258 666   (W.E. EDSTROM)<br>* Zusammenfassung; Abbildungen 1,3-5 *<br>- - - | 1 | A 01 K 7/06<br>F 16 K 21/04 |
| A | DE-U-7 315 030   (FOX PRODUCTS CO.)<br>* Abbildungen 1,5,6 *<br>- - - | 1 | |
| D,A | DE-C-2 632 734   (ARATOWERK WALTER V. TASCHITZKI)<br>* Spalte 4, Zeile 62 - Spalte 6, Zeile 10; Abbildungen 1-3 *<br>- - - - - | 1 | |

| RECHERCHIERTE SACHGEBIETE (Int. Cl.5) |
|---|
| A 01 K<br>F 16 K |

Der vorliegende Recherchenbericht wurde für alle Patentansprüche erstellt

| Recherchenort | Abschlußdatum der Recherche | Prüfer |
|---|---|---|
| Berlin | 28 September 90 | MARTIN DEL RIO A |